(19) Europäisches Patentamt
European Patent Office
Office européen des brevets

(11) **EP 3 147 893 B1**

(12) **EUROPEAN PATENT SPECIFICATION**

(45) Date of publication and mention of the grant of the patent:
**09.06.2021 Bulletin 2021/23**

(51) Int Cl.:
***G09G 3/36*** *(2006.01)*

(21) Application number: **16190050.1**

(22) Date of filing: **22.09.2016**

(54) **LIGHT FIELD SIMULATION TECHNIQUES FOR DUAL MODULATION**

LICHTFELDSIMULATIONSTECHNIKEN FÜR DUALE MODULATION

TECHNIQUES DE SIMULATION DE CHAMP DE LUMIÈRE DE MODULATION DOUBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2015 EP 15186632**

(43) Date of publication of application:
**29.03.2017 Bulletin 2017/13**

(73) Proprietor: **Dolby Laboratories Licensing Corporation**
**San Francisco, CA 94103 (US)**

(72) Inventors:
• **NINAN, Ajit**
  **Sunnyvale, CA California 94085 (US)**
• **JIA, Wenhui**
  **Sunnyvale, CA California 94085 (US)**
• **WAN, Chun Chi**
  **Sunnyvale, CA 94085 (US)**

(74) Representative: **Dolby International AB**
**Patent Group Europe**
**Apollo Building, 3E**
**Herikerbergweg 1-35**
**1101 CN Amsterdam Zuidoost (NL)**

(56) References cited:
**WO-A1-2012/119191    WO-A1-2014/137565**

**Description**

TECHNOLOGY

The present invention relates generally to display techniques, and in particular, to display techniques for dual modulation with light conversion.

BACKGROUND

Color filter arrays in liquid crystal displays (LCDs) and organic light-emitting diode (OLED) displays are commonly produced by photolithographic techniques, or printing techniques, as part of the LCD and OLED panel production process. Color filters in emissive displays such as LCD and OLED displays typically consist of red, green and blue filters. The color filters are patterned over the pixel array to allow the pixel elements to modulate the emitted light by color, as well as by intensity. In operation, a broadband light source (e.g., white light) provides light to pixel elements, for example, in LCD display systems. Alternatively, broadband light is created by white OLED pixel elements in OLED display systems. A pixel element can vary the intensity of the broadband light transmitting out of the pixel element. The intensity modulated broadband light of each pixel element can be further color filtered by overlaying color filters. Considerable light is wasted by color filters because, for example, in order to produce red light spectrum (e.g., about 620-740 nanometers), then green light (e.g., about 520-570 nanometers) spectrum and blue light spectrum (e.g., about 450-495 nanometers) of the broadband light source would be blocked. Additionally, this wasted light is converted into harmful heat which degrades the performance and lifetime of the display system.

Thus, engineering a display system with wide color gamut and high luminance has been recognized as a costly endeavor by many display manufactures. Because of a high number of relatively expensive optical, audio, electronic and mechanical components involved and the complexity in integrating all of them into a single system, the cost of manufacturing a praiseworthy display system is typically very high.

Accordingly, it is seen by the inventors here that a dual modulation display with light conversion can provide many performance benefits over conventional techniques employing color filters. Additionally, as discovered by the inventors, introduction of light conversion to a local dimming display architecture results in color non-uniformity. Techniques to compensate for color non-uniformity, particularly for a white light local dimming display, are provided.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section. Similarly, issues identified with respect to one or more approaches should not assume to have been recognized in any prior art on the basis of this section, unless otherwise indicated.

Published international application WO 2014/137565 A1 discloses techniques for driving a dual modulation display include generating backlight drive signals to drive individually-controllable illumination sources. The illumination sources emit first light onto a light conversion layer. The light conversion layer converts the first light into second light. The light conversion layer can include quantum dots or phosphor materials. Modulation drive signals are generated to determine transmission of the second light through individual subpixels of the display. These modulation drive signals can be adjusted based on one or more light field simulations. The light field simulations can include: (i) a color shift for a pixel based on a point spread function of the illumination sources; (ii) binning difference of individual illumination sources; (iii) temperature dependence of display components on performance; or (iv) combinations thereof.

SUMMARY OF THE DESCRIPTION

Methods and apparatuses for driving a dual modulation display (also referred to herein as a local dimming display) are provided. Illumination sources emit first light onto a light conversion layer. The light conversion layer converts the first light into second light. Modulation drive signals to determine transmission of the second light can be adjusted based, in part, on one or more light field simulations.

The present invention relates to an apparatus as set out in claim 1 and a method as set out in claim 7. Further embodiments are described in the dependent claims.

As an embodiment of the present invention, driving a local dimming display includes generating backlight drive signals to drive individually controllable illumination sources. The illumination sources emit first light onto a light conversion layer. The light conversion layer converts the first light into second light. The light conversion layer can include quantum dots (QD) or phosphor materials. Modulation drive signals are generated to determine transmission of the second light through individual subpixels of the display. These modulation drive signals can be adjusted based on one or more light field simulations. The light field simulations can address: (i) a resulting color shift for a pixel based on a point spread function of the illumination sources; (ii) binning difference of individual illumination sources; (iii) temperature dependence of display components on performance; or (iv) combinations thereof.

As another embodiment of the present invention, a method for driving a local dimming display includes generating, based on image data, backlight drive signals to drive individually controllable, light emitting diode (LED) sources of a backlight. The individually controllable LED sources emit a first light onto a quantum dot layer, which converts at least a portion of the first light (as well as, optionally, recycled light within the display) into second light. LCD modulation drive signals, regulating transmission of the second light through individual subpixels of the display by an LCD array, are determined. An increase in yellow light spectral components for a pixel based upon one or more of the backlight drive signals and respective distances between the pixel and one or more LED sources is determined. The LCD modulation drive signal for at least one subpixel of the pixel is adjusted to reduce yellow light spectral components when rendering the pixel.

As yet another embodiment of the present invention, a display system includes one or more illumination sources of a backlight configured to emit first light. The first light can include ultraviolet (UV) spectral components (e.g., about 10-400 nanometers) and/or blue light spectral components. The display further includes one or more light conversion layers configured to be stimulated by the first light and to convert at least a portion of the first light into second light. Light modulators are configured to modulate an amount of second light transmitted through individual subpixels of the display system. Logic computes one or more light field simulations for (i) color shifts as a function of a backlight point spread function, (ii) a difference between a performance characteristic of an illumination source of the one or more illumination sources of the backlight and a performance characteristic of the backlight, (iii) temperature variance for a rendered pixel, or combinations thereof. A controller can adjust drive values for the one or more light modulators based on the light field simulation.

BRIEF DESCRIPTION OF DRAWINGS

The present invention is illustrated by way of example, and not by way of limitation, in the figures of the accompanying drawings and in which like reference numerals refer to similar elements and in which:

FIG. 1 illustrates an exemplary color array panel comprising a conversion layer;
FIGS. 2A, 2B and 2C illustrate an example PSF having a color shift as a function of distance from center.
FIG. 2D illustrates an example PSF having a spatially varying color shift for backlight of blue LEDs.
FIG. 3 illustrates an exemplary configuration of display logic in a display system;
FIG. 4 illustrates an exemplary flow diagram for driving a local dimming display.
FIG. 5 illustrates an example hardware platform on which a computer or a computing device as described herein may be implemented, according a possible embodiment of the present invention.
FIGS. 6A and 6B illustrate simplified configurations of local dimming with light conversion.
FIG. 7 illustrates an exemplary configuration according to the present disclosure of local dimming with light conversion where a nine channel LFS is used on a nine channel PSF.
FIG. 8A illustrates an exemplary LED grid of the local dimming configuration depicted in FIG. 7.
FIG. 8B illustrates an exemplary LFS grid of the local dimming configuration depicted in FIG. 7 using the exemplary LED grid depicted in FIG. 8A.

**DESCRIPTION OF EXAMPLE POSSIBLE EMBODIMENTS**

The following description and drawings are illustrative of the invention and are not to be construed as limiting the invention. Numerous specific details are described to provide a thorough understanding of the invention. However, in certain instances, well known or conventional details are not described in order to avoid obscuring the description of the invention. Additionally, details from US Patent Application 14/370,115 entitled "Techniques for Dual Modulation Display with Light Conversion".

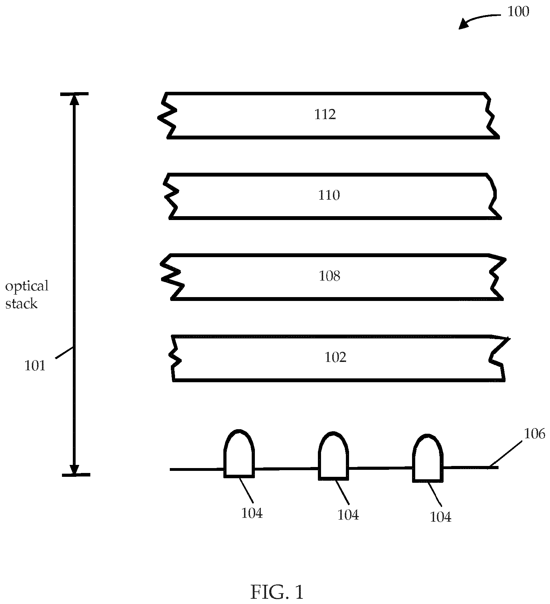

FIG. 1 illustrates an exemplary color array panel 100 comprising an optical stack 101. Optical stack 101 can include, without limitation:

i. conversion layer 102;
ii. illumination sources 104;
iii. reflector surface 106;
iv. diffuser layer 108;
v. light recycling film 110; and
vi. light modulation layer 112.

Conversion layer 102, disposed in front (from a viewer's perspective) of illumination sources 104, can comprise quantum dot or phosphor materials. Quantum dot (e.g., nano-scale particles using a quantum confinement effect for light emission) or phosphor materials can be coated, attached to, doped, or otherwise disposed on a top surface, bottom surface, or both surfaces of an optical layer to form conversion layer 102. Quantum dot or phosphor materials may also be embedded within the optical layer. These materials may be disposed with the optical layer in any combination or order of various disposition methods.

Conversion layer 102, using quantum dot color arrays or phosphor color arrays, impart colors in a color display system. A red quantum dot or phosphor material absorbs light of higher energies or shorter wavelengths such as green and blue light and emits red light. A green quantum dot or phosphor material absorbs blue light and emit green light. Accordingly, as an embodiment of the present invention, conversion layer 102 produces desired colors: red and green light converted from a blue light source; while blue light is emitted from the blue light source directly.

In an embodiment of the present invention, conversion layer 102 is a single sheet (or, alternatively, multiple of segments arranged to form a single plane) extending, in width and height, to be substantially equal to dimensions of an active area of the display device. For example, conversion layer 102 can measure, diagonally, about 4 inches, 10 inches, 32 inches, 40 inches, 50 inches, 58 inches or more. Additionally, conversion layer 102 can have an aspect ratio, or the proportional relationship between width and height, of 16:9, 4:3, 3:2, 5:3, 5:4, or 1:1, among others. As illustrated in FIG. 1, conversion layer 102 is disposed away from illumination source 104. In an alternative embodiment of the present invention, conversion layer 102 comprises a plurality of segments. In a specific embodiment, each segment of the plurality of segments is associated with a single illumination source 104.

Illumination sources 104 can be any source of electromagnetic energy useable by conversion layer 102 to produce perceptible light for human or machine vision. For example, illumination sources 104 can include one or more of OLED, RGB LED, broadband LED, blue spectrum LED, ultraviolet spectrum LED, or the like.

These illumination sources 104 can be arranged as an array extending substantially the length and height of the active area of the display device. The pitch density between illumination sources 104 can equal or correspond to the pixel resolution of the display. That is to say, the ratio of illumination sources 104 to the number of pixel can be 1:1 (e.g., 1920 × 1080, 3840 x 2160, or 7680 x 4320 illumination sources for respective display resolution). In this case, the position of each of the illumination sources 104 can be directly aligned behind (from viewer's perspective) a corresponding pixel. In other cases, illuminations sources 104 can be disposed with a lateral offset from a corresponding pixel or between two pixels. The pitch between illuminations sources 104 can be uniform or non-uniform, for example, pitch density can be higher in proximity to a central active area of display than in a periphery, edges, corners, or black borders in letterbox format.

In other embodiments, the ratio between of illumination sources 104 to the number of pixel can be lower, such as 1:2, 1:3, 1:4, 1:10, or more. In this case, the resolution of the backlight image will be decreased. Alternatively, the ratio can be higher, such as 2:1, 3:1, or less. For example, an illumination source can be associated with a subpixel, instead of a pixel or group of pixels.

These illumination sources 104 are individually controlled or, alternatively, a subset of them can be collectively controlled in unison. The flexibility of backlight control through individually controllable illumination sources 104 permits local dimming. Additional details about local dimming can be found in U.S. Patent No. 8,277,056, entitled "Locally Dimmed Display,". However, despite individual control of illumination sources 104, the PSF for each of illumination sources 104 can overlap to contribute to the intensity of a plurality of pixels.

Although FIG. 1 illustrates a direct-lit backlight display, an edge-lit display can also enjoy the benefits of the inventions taught in this disclosure (e.g., compensation for color shift from PSF, illumination source binning, or temperature variance). In such an embodiment, a spatial light modulator illuminated by one or more light sources positioned at an edge of the spatial light modulator. Additional details about edge-lit, local dimming can be found in U.S. Patent No. 8,172,401, entitled "Edge Lit Locally Dimmed Display,".

Reflector surface 106 can be a broadband mirror surface, dichroic mirror surface reflecting a predetermined spectrum (e.g., one or more primary colors). Further, reflector surface 106 can include through-holes for illumination sources 104. These through-holes can be reamed, drilled, or milled. Reflector surface 106 redirects light back through the optical stack 101 for increased efficiency.

In FIG. 1, diffuser layer 108 scatters outgoing light through a range of directions so that a viewer located on an opposite side of diffuser 108 perceives light to originate from an increased area. In general, diffuser 108 can scatter light to a different angular extent in the horizontal and vertical planes.

Light recycling film 110 is used to boost the optical efficiency of backlighting. In some embodiments, as light modulation layer 112 can only (or substantially only) pass polarized light and that the backlight essentially produces unpolarized light. A reflective polarizer (e.g., 3M DBEF) can be used as the last optical layer before light modulation layer 112. Light of the wrong polarization incident on the light modulation layer 112, which would otherwise be absorbed, is reflected back by the light recycling film 110 towards the backlight. The reflected light would be scattered in diffuser layer 108 which randomizes the polarization. The reflected light having randomized polarization, which has a fraction of the correct polarization to pass through the light modulation layer 112, can be redirected toward the light modulation layer 112 as it scatters and bounces in the optical stack.

Another light recycling film 110 can be a prismatic structured film (e.g., 3M BEF) which is used to control the direction of light exiting the backlight unit. To maximize the intensity of light within the viewing angle of light modulation layer 112, light outside of the viewing angle can be reflected back into the optical cavity which after scattering and reflection can result in a fraction of the reflected light having the desired exiting angle within viewing angle.

Light modulation layer 112 may comprise, for example, (i) an LCD panel, which is an example of a transmission-type light modulator, (ii) a deformable mirror device (DMD), which is an example of a reflection-type light modulator, or (iii) a micro-electro-mechanical system (MEMS) based modulator. The elements of light modulator 112 are controlled according to data which defines an image being displayed.

It should be appreciated that FIG. 1 illustrates an embodiment of optical stack 101, and the arrangement of elements therein can vary or can include additional elements not described. For example, light recycling film 110 can be disposed behind diffuser layer 108, rather than in front of it. As yet another example, conversion layer 102 can be disposed anywhere within optical stack 101 after illumination sources 104. All such modifications and variations are intended to be included within the scope of this disclosure.

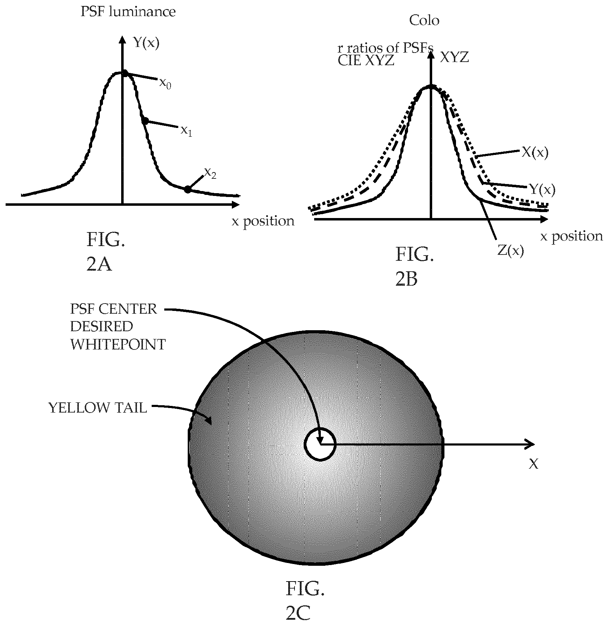

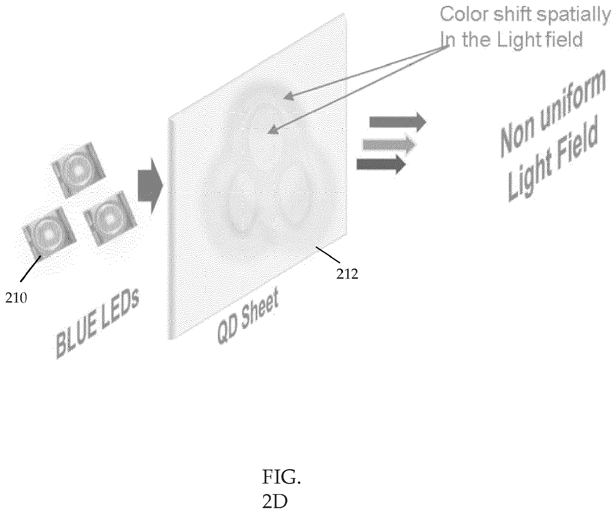

As appreciated by the inventors here, exemplary color array panel 100 suffers from a "yellow tail effect," or a point spread function (PSF) that shifts colors as a function of distance from center. That is to say, light traveling a relatively long optical path, redirected back to spatial regions close to or in light sources, can be spatially spread into wide angles and areas, and cause color shifts (e.g., yellow tails) - particularly with light recycling with one or more reflections. In such a system, for example, the light in the center of a point spread function of a direct-lit light emitter would be mostly converted, but rejected light components can bounce back in and convert with less green and red as the distance from the center of the point spread function of the light emitter to outer circumferences increases, giving rise to a color shift to the point spread function (PSF). The PSF tail becomes increasingly yellow even when the PSF center has a desired white point. Without the presence of compensation, color shift degradation may be especially noticeable or even visually prominent. FIGS. 2A, 2B and 2C, as simple illustrations, show the yellow tail effect. FIG. 2D illustrates an example PSF having a spatially varying color shift for backlight of blue LEDs.

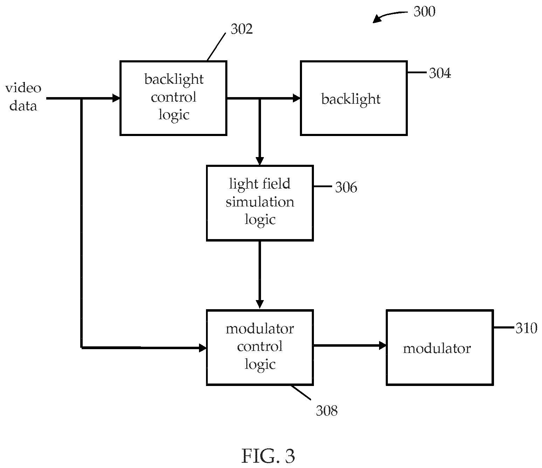

FIG. 3 illustrates an exemplary configuration of display logic in a display system 300. In accordance with some possible embodiments of the present invention, display system 300 includes backlight control logic 302 to control illumination sources in backlight 304. These illumination sources may be same or similar to illumination sources 104 shown in FIG. 1. Backlight control logic 302 can be operatively coupled with an image data source (not shown) (e.g., a set-top box, networked server, storage media or the like) and is configured to receive image data from the image data source. Image frames received or generated from image data from an internal or external source may be used by the backlight control logic 302 to drive the backlight 304. For example, backlight control logic 302 may be configured to control backlight 304 to illuminate one or more pixels or sub-pixels with a specific intensity. The image frames may be used by the backlight control logic 302 to derive individual or aggregate drive values in various frames in various resolutions.

In this embodiment of the present invention, backlight control logic 302 is logically coupled to light field simulation logic 306. Light field simulation logic 306 computes one or more influences on the light field, such as, for example, the yellow tail effect, illumination source binning, temperature dependence on system components and the like. Based on these influences, light field simulation logic 306 and/or modulator control logic 308 (e.g., LCD panel control logic) can mitigate them for improved picture quality. For example, to mitigate the yellow tail effect, drive values to the modulator 310 (e.g., an LCD panel) can be biased to be more blue.

In one embodiment, a light field simulation can utilize nine convolution channels representing three color tristimulus values for each of the three primary colors. However, this is computationally expensive. As an alternative, the light field simulation can model the individually controllable illumination sources of the backlight as having a first PSF for broadband light spectral components and a second PSF for yellow light spectral components - or two convolution channels, not nine. The first PSF is narrower than the overlapping second PSF from the yellow tail effect.

Light field simulation logic 306 can include a convolution channel to compensate for binning (lack or insufficiency thereof) of backlight LEDs (e.g., illumination sources 102). For a broadband backlight, white LEDs, constructed with blue LED dies and yellow phosphor (e.g., YAG phosphor), can be used. However, binning variation of white LEDs with wide performance ranges can reduce display accuracy and uniformity. In particular, the yellow phosphor material on each blue LED die can vary causing a differing white point. The yellow phosphor on each blue LED die can also have varying spectral emission. Similarly, in an embodiment exclusively using UV and/or blue spectral components for backlighting, these UV or blue LEDs can have different intensity for constant power or vary in emission spectrums.

As embodiment of the present invention, light field simulation logic 306 can be used to compensate for temperature dependence of display performance with additional convolution channels. For example, derating function(s) can be used to account, either individually or collectively, for temperature dependence of illumination sources or a conversion layer. As another example, a temperature dependent point spread function can be used to address optical sheet warping. In a specific embodiment, one or more temperature measurements can be taken from one or more sensors (disposed within the optical stack) or temperature can be inferred by a display characteristic (e.g., performance change over time).

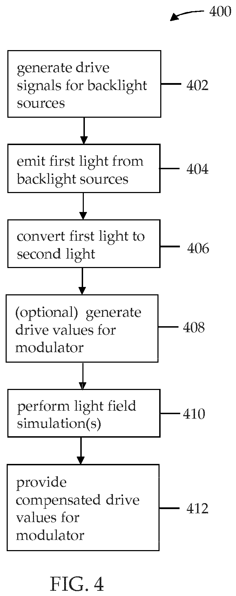

FIG. 4 illustrates an exemplary flow diagram 400 for driving a local dimming display. In step 402, drive signals for the backlight (e.g., illumination sources 104) can be generated. The driven backlight produces a first light, in step 404. The first light can be a broadband light (e.g., white light), UV spectral components, blue spectral components, or any portion of the spectrum. As shown in step 406, first light is converted into a second light. For example, a conversion layer receives the first light produces second light with desired colors (e.g., red or green light).

Next, in step 408, drive values for a modulator (e.g., an LCD panel), preferably a subpixel modulator for each primary color, are generated based on input image data. The results of the one or more light field simulations can be used to adjust, modify or weigh modulator drive values, as reflected in step 412. One or more light field simulations for compensation are performed in step 410. As described herein, light field simulations can address, as examples, (i) color shifts as a function of a backlight point spread function, (ii) a difference between a performance characteristic of an illumination source of the one or more illumination sources of the backlight and a performance characteristic of the backlight, (iii) temperature variance on performance, or (iv) combinations thereof.

It is appreciated that flow diagram 400 described herein is for illustrative purposes only and that various modifications or changes in light thereof will be suggested to persons skilled in the art. In alternative implementations, the steps noted in flow diagram 400 may occur out of the order noted in FIG. 4, may include additional steps, and/or may omit some steps altogether. For example, steps 402 and 408 may in fact be executed substantially concurrently or in reverse order. As another example, step 410 can be performed before step 404. All such modifications and variations are intended to be included within the scope of this disclosure.

Embodiments include an apparatus comprising a processor and configured to perform any one of the foregoing methods as discussed above.

Embodiments include a computer readable storage medium, comprising software instructions, which when executed by one or more processors causes performance of any one of the foregoing methods as discussed above.

IMPLEMENTATION MECHANISMS - HARDWARE OVERVIEW

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

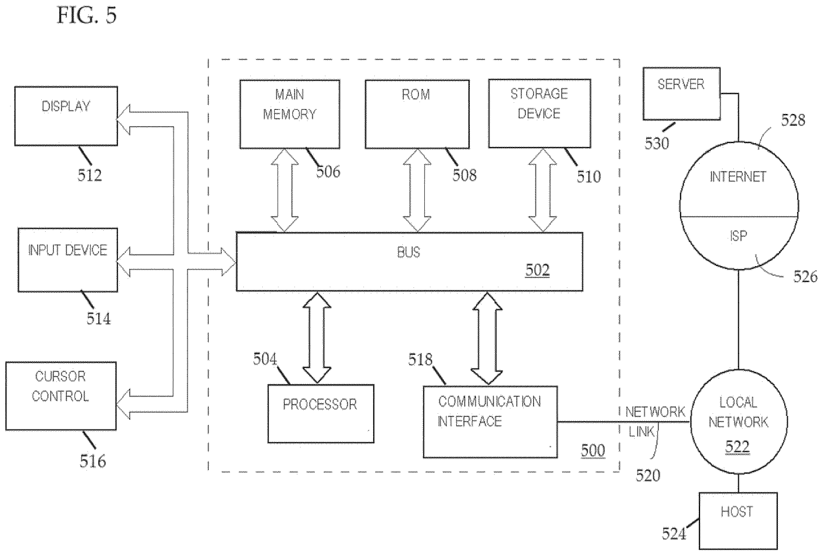

For example, FIG. 5 is a block diagram that illustrates a computer system 500 upon which an embodiment of the invention may be implemented. Computer system 500 includes a bus 502 or other communication mechanism for communicating information, and a hardware processor 504 coupled with bus 502 for processing information. Hardware processor 504 may be, for example, a general purpose microprocessor.

Computer system 500 also includes a main memory 506, such as a random access memory (RAM) or other dynamic storage device, coupled to bus 502 for storing information and instructions to be executed by processor 504. Main memory 506 also may be used for storing temporary variables or other intermediate information during execution of instructions to be executed by processor 504. Such instructions, when stored in storage media accessible to processor 504, render computer system 500 into a special-purpose machine that is customized to perform the operations specified in the instructions.

Computer system 500 further includes a read only memory (ROM) 508 or other static storage device coupled to bus 502 for storing static information and instructions for processor 504. A storage device 510, such as a magnetic disk or optical disk, is provided and coupled to bus 502 for storing information and instructions.

Computer system 500 may be coupled via bus 502 to a display 512, such as a liquid crystal display (LCD), for displaying information to a computer user. An input device 514, including alphanumeric and other keys, is coupled to bus 502 for communicating information and command selections to processor 504. Another type of user input device is cursor control 516, such as a mouse, a trackball, or cursor direction keys for communicating direction information and command selections to processor 504 and for controlling cursor movement on display 512. This input device typically has two degrees of freedom in two axes, a first axis (e.g., x) and a second axis (e.g., y), that allows the device to specify positions in a plane.

Computer system 500 may implement the techniques described herein using customized hard-wired logic, one or more ASICs or FPGAs, firmware and/or program logic which in combination with the computer system causes or programs computer system 500 to be a special-purpose machine. According to one embodiment, the techniques herein are performed by computer system 500 in response to processor 504 executing one or more sequences of one or more instructions contained in main memory 506. Such instructions may be read into main memory 506 from another storage medium, such as storage device 510. Execution of the sequences of instructions contained in main memory 506 causes processor 504 to perform the process steps described herein. In alternative embodiments, hard-wired circuitry may be used in place of or in combination with software instructions.

The term "storage media" as used herein refers to any media that store data and/or instructions that cause a machine to operation in a specific fashion. Such storage media may comprise non-volatile media and/or volatile media. Non-volatile media includes, for example, optical or magnetic disks, such as storage device 510. Volatile media includes dynamic memory, such as main memory 506. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 502. Transmission media can also take the form of acoustic or light waves, such as those generated during radio-wave and infra-red data communications.

Various forms of media may be involved in carrying one or more sequences of one or more instructions to processor 504 for execution. For example, the instructions may initially be carried on a magnetic disk or solid state drive of a remote computer. The remote computer can load the instructions into its dynamic memory and send the instructions over a telephone line using a modem. A modem local to computer system 500 can receive the data on the telephone line and use an infra-red transmitter to convert the data to an infra-red signal. An infra-red detector can receive the data carried in the infra-red signal and appropriate circuitry can place the data on bus 502. Bus 502 carries the data to main memory 506, from which processor 504 retrieves and executes the instructions. The instructions received by main memory 506 may optionally be stored on storage device 510 either before or after execution by processor 504.

Computer system 500 also includes a communication interface 518 coupled to bus 502. Communication interface 518 provides a two-way data communication coupling to a network link 520 that is connected to a local network 522. For example, communication interface 518 may be an integrated services digital network (ISDN) card, cable modem, satellite modem, or a modem to provide a data communication connection to a corresponding type of telephone line. As another example, communication interface 518 may be a local area network (LAN) card to provide a data communication connection to a compatible LAN. Wireless links may also be implemented. In any such implementation, communication interface 518 sends and receives electrical, electromagnetic or optical signals that carry digital data streams representing various types of information.

Network link 520 typically provides data communication through one or more networks to other data devices. For example, network link 520 may provide a connection through local network 522 to a host computer 524 or to data equipment operated by an Internet Service Provider (ISP) 526. ISP 526 in turn provides data communication services through the world wide packet data communication network now commonly referred to as the "Internet" 528. Local network 522 and Internet 528 both use electrical, electromagnetic or optical signals that carry digital data streams. The signals through the various networks and the signals on network link 520 and through communication interface 518, which carry the digital data to and from computer system 500, are example forms of transmission media.

Computer system 500 can send messages and receive data, including program code, through the network(s), network link 520 and communication interface 518. In the Internet example, a server 530 might transmit a requested code for an application program through Internet 528, ISP 526, local network 522 and communication interface 518. The received code may be executed by processor 504 as it is received, and/or stored in storage device 510, or other non-volatile storage for later execution.

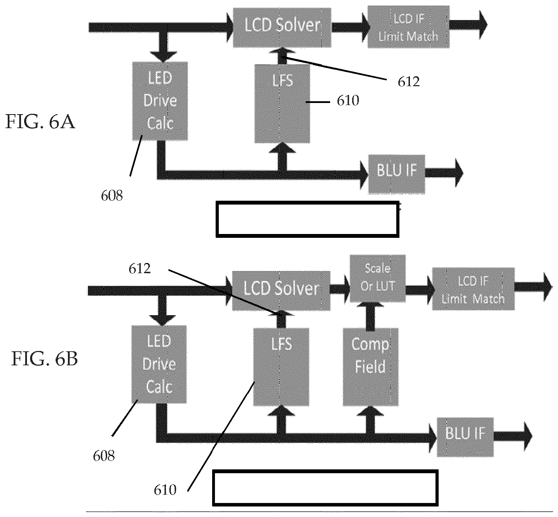

FIG. 6A illustrates a simplified configuration for local dimming with light conversion. FIG. 6B illustrates a simplified configuration for local dimming with light conversion with compensation for spatial color non-uniformity.

In one or more embodiments of the present invention, techniques for QD local dimming mitigates a variance in color point spread function (PSF) across the screen. This can be done mathematically accurately by creating multiple light field simulations to change the parameters on an LCD solving matrix. A typical implementation can use nine light field simulations; however, for consumer applications, a perfect mathematical solution is generally not needed.

As a particular embodiment of the present invention, logic 608 determines one or more drive signals controlling backlight illumination sources. Based on these drive signals backlight illumination sources (e.g., LEDs, LED 210) emit first light (e.g., broad spectrum white light, blue light, ultraviolet light) onto one or more light conversion layers (e.g., quantum dot layers, QD sheet 212, or the like).

Based on the teachings herein, a backlight algorithm for light field simulation 610, where the PSF is assumed to result in a uniform white light, defines a first path 612 for intermediate LCD drive values. An additional path corrects for variations from a white, uniform solution to reduce spatial color non-uniformity.

As a further example, instead of corrections to the matrix, compensation logic 614 can spatially scale the red, green, and blue primaries, in the case of an RGB system. Alternatively to scaling, compensation logic 614 can be accomplished by a suitable lookup table (LUT), e.g., a one dimensional, two dimensional, or three dimensional LUT. Compensation can be determined for one or more color components.

As mentioned above while discussing the exemplary configurations depicted in FIG. 3 and FIGs. 6A-6B, in applications where a higher color accuracy performance is desired, usage of a multiple channel light field simulation can be desirable. In some aspect, an associated color accuracy performance of a specific local dimming with light conversion configuration, such as depicted in FIG. 3 and FIGs. 6A-6B, can depend on a number of such channels as well as a number of PSF channels used to characterize each illumination source. The person skilled in the art will appreciate the increase in computational and storage cost associated with an increase in number of LFS and PSF channels. According to an embodiment of the present disclosure, a nine channel light field simulation (LFS) is used, where each channel uses one of nine different point spread functions, where the nine different point spread functions characterize, in combination, a point spread function (PSF) associated to one illumination source (e.g. OLED) through the individual subpixels of the display (e.g. RGB LCD panel). Practical implementation of such technique according to the present invention is provided by the use of a general multi-term separable PSF representation having a single two-dimensional (2D) PSF distribution for the nine channels, instead of one different 2D PSF distribution for each of the nine channels. Accordingly, the use of the nine channels LFS operating on the nine channels PSF based on the general multi-term separable PSF allows for a lower computational and storage cost of the implementation while maintaining color accuracy performance.

A nine channel (9-channel) LFS is generally necessary and sufficient to account for a wide range of PSF characteristics including but not limited to the PSF due to quantum-dot with blue LEDs (e.g. as used in the configurations depicted in FIGs. 3 and 6A-6B) and is relevant to explain why 9-channel PSF is generally required to characterize the PSF due to quantum-dot with blue LEDs. It should be noted that there is an important distinction between the nine LFS channels and nine PSF channels. As used herein, a "9-channel LFS" describes a LFS implementation with 9 simulation (convolutional) channels which may or may not operate on nine unique PSF distributions (shapes) for the individual simulation channels. As used herein, the "9-channel PSF" refers to the most general color characterization of a PSF due to one LED through a RGB LCD panel without a per-wavelength or spectral PSF model.

A general spectral PSF model is mathematically represented as:

$$S(\lambda, x, y) \qquad (1)$$

for $\lambda$ as wavelength, $(x,y)$ as the spatial coordinates and $S(\lambda, x, y)$ as the spectral-spatial PSF model.

Although a spectral PSF model, such as one described by expression (1) above, is a valid representation of the light distribution caused by one LED on the front of screen, it is overcomplete and overly redundant for use in operation to model color on screen for color video processing. The reduction from a per-wavelength PSF model to a 9-channel PSF model while not losing essential color information for accurate color LFS can be achieved by converting the spectral PSF model to a tristimulus color PSF model via the definition of CIE color matching functions and spectrum to tristimulus values transformation. A given spectral PSF model having a 2D distribution per wavelength for many wavelengths can be transformed to a CIE XYZ PSF model having a 2D distribution for the each of CIE X, Y and Z tristimulus values to account for the effect of the spectral PSF in trichromatic color vision.

The CIE XYZ PSF model from the spectral PSF model is computed, using definition of CIE XYZ, as:

$$\begin{bmatrix} X(x,y) \\ Y(x,y) \\ Z(x,y) \end{bmatrix} = \int S(\lambda, x, y) \begin{bmatrix} \bar{x}(\lambda) \\ \bar{y}(\lambda) \\ \bar{z}(\lambda) \end{bmatrix} \mathrm{d}\lambda \qquad (2)$$

for $\bar{x}(\lambda)$, $\bar{y}(\lambda)$, $\bar{z}(\lambda)$ as the CIE 1931 color matching functions and $X(x,y)$, $Y(x,y)$, $Z(x,y)$ as the CIE XYZ PSF model.

To sufficiently model the effect of the light distribution produced by a LED on the front of screen on a RGB LCD panel for the purpose of processing for the RGB LCD pixel values (each pixel having three subpixels for the three R, G and B colors) to accurately display the color video, there are generally three basis spectral PSFs for each of R, G and B LCD color channels. Each of the three basis spectral PSFs represents a spectral PSF model of a LED through the three color filters (each filter associated to each of the three subpixels) which in general can be different, as is the case for the PSF due to quantum-dot with blue LEDs. The three spectral PSFs can each be transformed to their respective CIE XYZ PSF model such that the total number of basis color PSF components becomes nine due to the permutation of R, G and B LCD color channels and CIE X, Y and Z tristimulus values. For LCD panels having more or less than three color subpixels, the number of unique basis color PSF channels varies accordingly. It should be noted that the number of light fields required generally is due to the three values from CIE XYZ tristimulus values to represent color information and then further permuted with the number of LCD color channels such as three for the exemplary case of an RGB LCD.

The basis spectral PSF models and the corresponding CIE XYZ PSF models and basis CIE XYZ PSFs through RGB LCD color channels are defined as follows:

$$\begin{bmatrix} S_R(\lambda,x,y) \\ S_G(\lambda,x,y) \\ S_B(\lambda,x,y) \end{bmatrix} = \begin{bmatrix} T_R(\lambda)P_R(x,y) \\ T_G(\lambda)P_G(x,y) \\ T_B(\lambda)P_B(x,y) \end{bmatrix} S(\lambda,x,y) \qquad (3)$$

Using expression (2) for each of the three R, G and B colors yields to:

$$
\begin{bmatrix} X_R(x,y) \\ Y_G(x,y) \\ Z_B(x,y) \\ X_B(x,y) \\ Y_B(x,y) \\ Z_B(x,y) \\ X_B(x,y) \\ Y_B(x,y) \\ Z_B(x,y) \end{bmatrix} = \begin{bmatrix} \int S_R(\lambda,x,y) \begin{bmatrix} \bar{x}(\lambda) \\ \bar{y}(\lambda) \\ \bar{z}(\lambda) \end{bmatrix} d\lambda \\ \int S_G(\lambda,x,y) \begin{bmatrix} \bar{x}(\lambda) \\ \bar{y}(\lambda) \\ \bar{z}(\lambda) \end{bmatrix} d\lambda \\ \int S_B(\lambda,x,y) \begin{bmatrix} \bar{x}(\lambda) \\ \bar{y}(\lambda) \\ \bar{z}(\lambda) \end{bmatrix} d\lambda \end{bmatrix} \quad (4)
$$

$$
= \begin{bmatrix} \int T_R(\lambda)P_R(x,y)S(\lambda,x,y) \begin{bmatrix} \bar{x}(\lambda) \\ \bar{y}(\lambda) \\ \bar{z}(\lambda) \end{bmatrix} d\lambda \\ \int T_G(\lambda)P_G(x,y)S(\lambda,x,y) \begin{bmatrix} \bar{x}(\lambda) \\ \bar{y}(\lambda) \\ \bar{z}(\lambda) \end{bmatrix} d\lambda \\ \int T_B(\lambda)P_B(x,y)S(\lambda,x,y) \begin{bmatrix} \bar{x}(\lambda) \\ \bar{y}(\lambda) \\ \bar{z}(\lambda) \end{bmatrix} d\lambda \end{bmatrix}
$$

$$
= \begin{bmatrix} P_R(x,y) \int T_R(\lambda)S(\lambda,x,y) \begin{bmatrix} \bar{x}(\lambda) \\ \bar{y}(\lambda) \\ \bar{z}(\lambda) \end{bmatrix} d\lambda \\ P_G(x,y) \int T_G(\lambda)S(\lambda,x,y) \begin{bmatrix} \bar{x}(\lambda) \\ \bar{y}(\lambda) \\ \bar{z}(\lambda) \end{bmatrix} d\lambda \\ P_B(x,y) \int T_B(\lambda)S(\lambda,x,y) \begin{bmatrix} \bar{x}(\lambda) \\ \bar{y}(\lambda) \\ \bar{z}(\lambda) \end{bmatrix} d\lambda \end{bmatrix} \quad (5)
$$

$$
= \begin{bmatrix} P_R(x,y) \begin{bmatrix} \hat{X}_R(x,y) \\ \hat{Y}_R(x,y) \\ \hat{Z}_R(x,y) \end{bmatrix} \\ P_G(x,y) \begin{bmatrix} \hat{X}_G(x,y) \\ \hat{Y}_G(x,y) \\ \hat{Z}_G(x,y) \end{bmatrix} \\ P_B(x,y) \begin{bmatrix} \hat{X}_B(x,y) \\ \hat{Y}_B(x,y) \\ \hat{Z}_B(x,y) \end{bmatrix} \end{bmatrix} \quad (6)
$$

for $T_R(\lambda)$, $T_G(\lambda)$, $T_B(\lambda)$ as the LCD spectral transmission assumed to be uniform and additive at every red, green and blue subpixels, $P_R(x,y)$, $P_G(x,y)$, $P_B(x,y)$ as the LCD subpixel linear intensity values, $S_R(\lambda,x,y)$, $S_G(\lambda,x,y)$, $S_B(\lambda,x,y)$ as the spectral PSF through every red, green and blue subpixels, $X_R(x,y)$, $Y_R(x,y)$, $Z_R(x,y)$, $X_G(x,y)$, $Y_G(x,y)$, $Z_G(x,y)$, $X_B(x,y)$, $Y_B(x,y)$, $Z_B(x,y)$ as the CIE XYZ PSF model through red, green and blue subpixels and the $\hat{X}_R(x,y)$, $\hat{Y}_R(x,y)$, $\hat{Z}_R(x,y)$, $\hat{X}_G(x,y)$, $\hat{Y}_G(x,y)$, $\hat{Z}_G(x,y)$, $\hat{X}_B(x,y)$, $\hat{Y}_B(x,y)$, $\hat{Z}_B(x,y)$ as the basis CIE XYZ PSFs independent of the LCD subpixel values .

In summary, based on the expression (6) above, the spectral PSF model through RGB LCD panel can be reduced into a representation consistent of nine channels of 2D distributions:

$$\hat{X}_R(x,y), \hat{Y}_R(x,y), \hat{Z}_R(x,y), \hat{X}_G(x,y), \hat{Y}_G(x,y), \hat{Z}_G(x,y), \hat{X}_B(x,y), \hat{Y}_B(x,y), \hat{Z}_B(x,y)$$

which are the basis CIE XYZ PSFs.

In practice, the general 9-channel LFS operates on these nine channels of PSF independently to accumulate the contribution from multiple LED sources into these nine component channels. As used herein, the nine component channels refer to the nine channels of LFS output from the accumulation of the PSF contribution from each LED source through R, G and B LCD subpixels into CIE X, Y and Z channels (as in the components of expression (6) above) resulting in a 3x3 matrix (the nine component channels) at each pixel. Due to the generality of the nine basis CIE XYZ PSFs to encode the effect on color at any pixels due to the light distribution produced by any LED on the front of a RGB LCD panel, a LFS implementation having nine simulation channels with one for each of the nine basis color PSF channels can sufficiently and completely account for any spatial-color PSF variations due to any LED in the backlight.

The key property that distinguishes a PSF due to a simple white LED or a single color LED die from a PSF due to quantum-dot or other remote phosphor sheet backlit by a blue LED is the spectral-spatial separability of the spectral PSF model. The PSF due to a simple white LED or single color LED die can be modeled as being spectral-spatially separable while the PSF due to quantum-dot or other remote phosphor sheet backlit by, for example, a blue LED is generally not spectral-spatially separable. Specifically, spectral-spatial separability means that the spectrum has a constant shape everywhere and is scaled uniformly at all wavelengths by an intensity function over space, and can therefore be represented by the expression:

$$(\lambda,x,y) = (\lambda)(x,y) \qquad\qquad (7)$$

The property of spectral-spatial separability allows for a further reduction in the complexity of the CIE XYZ PSF model as follows, starting by the expression (5) derived above and using the representation expressed in (7):

$$
\begin{bmatrix} X_R(x,y) \\ Y_G(x,y) \\ Z_B(x,y) \\ X_B(x,y) \\ Y_B(x,y) \\ Z_B(x,y) \\ X_B(x,y) \\ Y_B(x,y) \\ Z_B(x,y) \end{bmatrix} =
\begin{bmatrix}
P_R(x,y) \int T_R(\lambda)S(\lambda,x,y) \begin{bmatrix} \bar{x}(\lambda) \\ \bar{y}(\lambda) \\ \bar{z}(\lambda) \end{bmatrix} d\lambda \\
P_G(x,y) \int T_G(\lambda)S(\lambda,x,y) \begin{bmatrix} \bar{x}(\lambda) \\ \bar{y}(\lambda) \\ \bar{z}(\lambda) \end{bmatrix} d\lambda \\
P_B(x,y) \int T_B(\lambda)S(\lambda,x,y) \begin{bmatrix} \bar{x}(\lambda) \\ \bar{y}(\lambda) \\ \bar{z}(\lambda) \end{bmatrix} d\lambda
\end{bmatrix}
\tag{5}
$$

$$
=
\begin{bmatrix}
P_R(x,y) \int T_R(\lambda)S(\lambda)f(x,y) \begin{bmatrix} \bar{x}(\lambda) \\ \bar{y}(\lambda) \\ \bar{z}(\lambda) \end{bmatrix} d\lambda \\
P_G(x,y) \int T_G(\lambda)S(\lambda)f(x,y) \begin{bmatrix} \bar{x}(\lambda) \\ \bar{y}(\lambda) \\ \bar{z}(\lambda) \end{bmatrix} d\lambda \\
P_B(x,y) \int T_B(\lambda)S(\lambda)f(x,y) \begin{bmatrix} \bar{x}(\lambda) \\ \bar{y}(\lambda) \\ \bar{z}(\lambda) \end{bmatrix} d\lambda
\end{bmatrix}
$$

$$
= f(x,y)
\begin{bmatrix}
P_R(x,y) \int T_R(\lambda)S(\lambda) \begin{bmatrix} \bar{x}(\lambda) \\ \bar{y}(\lambda) \\ \bar{z}(\lambda) \end{bmatrix} d\lambda \\
P_G(x,y) \int T_G(\lambda)S(\lambda) \begin{bmatrix} \bar{x}(\lambda) \\ \bar{y}(\lambda) \\ \bar{z}(\lambda) \end{bmatrix} d\lambda \\
P_B(x,y) \int T_B(\lambda)S(\lambda) \begin{bmatrix} \bar{x}(\lambda) \\ \bar{y}(\lambda) \\ \bar{z}(\lambda) \end{bmatrix} d\lambda
\end{bmatrix}
$$

$$
= f(x,y)
\begin{bmatrix}
P_R(x,y) \begin{bmatrix} \hat{X}_R \\ \hat{Y}_R \\ \hat{Z}_R \end{bmatrix} \\
P_G(x,y) \begin{bmatrix} \hat{X}_G \\ \hat{Y}_G \\ \hat{Z}_G \end{bmatrix} \\
P_B(x,y) \begin{bmatrix} \hat{X}_B \\ \hat{Y}_B \\ \hat{Z}_B \end{bmatrix}
\end{bmatrix}
\tag{8}
$$

for $\hat{X}_R, \hat{Y}_R, \hat{Z}_R, \hat{X}_G, \hat{Y}_G, \hat{Z}_G, \hat{X}_B, \hat{Y}_B, \hat{Z}_B$ for the spatially independent CIE XYZ color channel contributions through red, green and blue subpixels, and $f(x,y)$ as a 2D distribution independent of color.

In summary, as demonstrated above and expressed by (8), the spectral PSF model through RGB LCD panel with the property of spectral-spatial separability can be reduced into a representation having nine coefficients with values represented by $\hat{X}_R, \hat{Y}_R, \hat{Z}_R, \hat{X}_G, \hat{Y}_G, \hat{Z}_G, \hat{X}_B, \hat{Y}_R, \hat{Z}_B$, and one 2D distribution (represented by $(x, y)$ in expression (8) above) for the spatially independent CIE XYZ color channel contributions through red, green and blue subpixels and a scalar intensity PSF.

Therefore, based on the above, the person skilled in the art will realize that in practice, the 9-channel LFS with PSFs that satisfy the property of spectral-spatial separability can operate on a common PSF while using one of nine component CIE XYZ through RGB LCD channel coefficients in each LFS channel.

Inventors of the current disclosure have established that the PSF due to simple white LED or a single color LED die, such as blue, satisfy the spectral-spatial separability sufficiently well to be used in the operation of LFS to accurately simulate their effects for correctly solving for the RGB LCD subpixel values. In this case, it is sufficient to use one common 2D PSF shape along with nine color component coefficients for the 9-channel LFS.

The PSF due to quantum-dot or other remote phosphor sheet backlit by, for example, a blue LED, does not satisfy the spectral-spatial separability and therefore requires the more general 9-channel LFS using nine different 2D PSF shapes for each of the nine color components. Such effect is due to the blue light emitted by the blue LED being partially absorbed by the quantum-dot or other remote phosphor sheet as it propagates within the backlight optics and converted into red and green light on every interaction with quantum-dot or phosphor material. The blue channels of the CIE XYZ PSFs tend to be spatially narrower than the other channels. A similar effect also occurs to the green light emitted from the conversion from blue light by the quantum-dot or phosphor material which is partially absorbed and converted into red light as it propagates within the backlight optics. The green channels of the CIE XYZ PSFs tend to be spatially wider than the blue channels CIE XYZ PSFs and narrower than the red channels CIE XYZ PSFs. The respective CIE XYZ components also have varying spatial widths due to the wavelength dependent propagation of light within the backlight optics having quantum-dot or remote phosphor sheets. More detailed description can be found in U.S. Patent Application No. 14/030,896, entitled "Quantum Dot/Remote Phosphor Display System Improvements", which is incorporated herein by reference in its entirety.

Due to the property of linearity for each of the nine component channels, alternative linear combinations of the components can still encode the complete color characteristics, for example to operate the LFS in RGB linear spaces instead of CIE XYZ color spaces, by pre-applying the coefficients from a 3x3 color transformation matrix on the nine component PSF channels. Such transformation may be applicable to eliminate redundant color transformations in video processing or to change required signal precision (e.g. bit depth). The bit-depth or signal precision required to representing the nine component channels of the LFS output may be optimized by the numerical techniques of matrix preconditioning. Optimal preconditioning 3x3 matrices may be found and be pre-applied on the nine component PSFs before convolutions in LFS. By doing so, the nine component channels of the LFS outputs when expressed as a 3x3 matrix per pixel can have lower "condition numbers" due to the applied preconditioning matrix which can improve the computational accuracy of LFS by reducing its sensitivity to finite precision computation.

Therefore, based on the above, the person skilled in the art will realize that:

i) A single 2D intensity model cannot represent the color characteristics of the PSF in cases where a quantum-dot or remote phosphor sheet backlit by, for example, blue LED, is used.

ii) Instead, for such cases, a minimal model which is a 9-channel PSF model where each channel is an independent 2D intensity distribution can be used. up-sampl

In some embodiments, when memory storage and bandwidth allows, the 2D (intensity) distributions can be stored as 2D lookup tables in the operation of LFS as general 2D convolutions. When storage is limited, mirror symmetries in the distributions may be assumed and only a quadrant of a 2D distribution may be stored and the lookup table indexing may be performed on the distance along horizontal and vertical axes instead of offsets to the distribution center which may be negative or positive.

According to an embodiment of the present disclosure, memory storage and bandwidth associated with the operation of the LFS can be reduced via usage of a general series of multi-term separable distributions. Decomposition of the 2D distribution functions into the general series of multi-term separable distributions may be performed by an offline numerical optimization process and can also be assisted with an online calibration process. It is expected that a realistic PSF from a display is never directly separable by the use of a single-term decomposition except with special optical design specifically engineered to produce such a PSF. As used herein, "single-term decomposition" refers to the trivial or simplest case in the below presented expression (9) where the PSF is approximated by one PSF term ($k = 1$) as the product of two 1D functions instead of the more general case of a sum of products of multiple pairs of 1D functions ($k > 1$). Most realistic PSFs have properties that permit an accurate representation using a finite series of separable terms where the number of terms in the series may be on the order of three to seven. Such properties may be low spatial frequency, circularity, smoothness, etc., and can therefore allow each of a 2D PSF channel to be represented by a series of separable terms as follows:

$$psf(x,y) = \sum_k f_k(x,y) = \sum_k u_k(x)v_k(y) \qquad (9)$$

The offline numerical optimization process can seek to minimize the difference between reference 2D distributions and a finite sum of products of 1D functions ($u_k(.)$, $v_k(.)$). The 1D functions can be arbitrary or may be further parameterized to assert characteristics such as symmetry, smoothness, nonnegativity, etc. The process can be assisted with an online calibration process to characterize the result of applying a particular iteration of the multi-term separable model in LFS and to further refine the decomposition to improve modeling accuracy with the multi-term separable model.

When the 1D functions may be arbitrarily determined numerically, one notable numerical method is to use the truncated singular value decomposition (as known to the skilled person) to efficiently represent a 2D distribution as a matrix and decompose it into a sum of products of orthonormal 1D vectors where successive terms in the summation improves on the accuracy of the separable model. Other methods may be nonnegative matrix factorization to assert nonnegativity of values in the decomposition. As the purpose of the process is ultimately to minimize the error in the application of the decomposition when operated by the LFS to achieve accurate front-of-screen picture presentation (e.g. color accuracy) with limited computational and storage resources, there is not necessarily one single optimal method.

As discussed above, the number of terms (indexed by $k$ in expression (9)) used in the decomposition can affect the fidelity of the separable model in representing the original 2D PSF distributions. It does not affect the measurements of the PSF but affects the accuracy of the LFS. When insufficient terms are used, the resultant approximation can cause visible artifact on the front-of-screen due to modeling error that does not completely account for the characteristics of the PSF. Inventors of the present application have established that a number of terms in a range of three to seven may be sufficient for an accurate representation of a PSF.

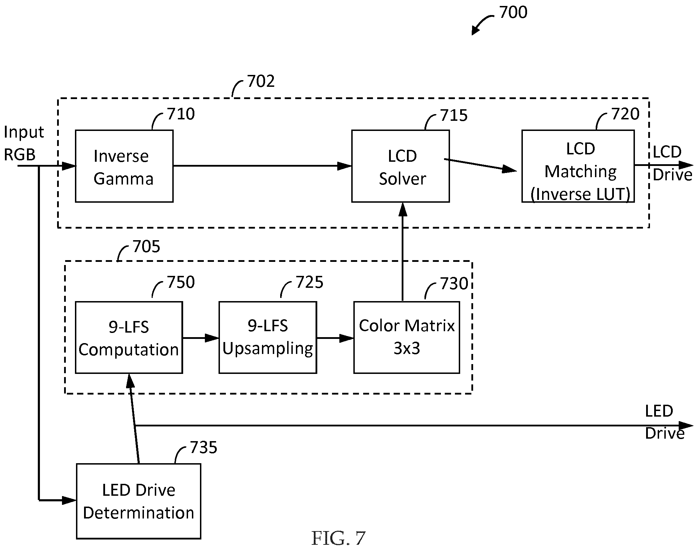

FIG. 7 illustrates an exemplary configuration 700 according to the present disclosure of local dimming with light conversion where a 9-channel LFS is used on a 9-channel PSF model. According to an exemplary embodiment, light conversion can be provided via a quantum dot or phosphor materials operating on ultraviolet or blue light, as previously discussed. Based on the above discussion, according to one exemplary embodiment of the present disclosure, each of the nine channels of the 9-channel PSF can be represented by a finite series of separable terms as expressed by (9) above, where the number of terms in the series may be on the order of three to seven. It should be noted that such number of terms is per an exemplary embodiment as other number of terms, either higher or lower, may be used with differing degrees of color rendition accuracy as described above.

The person skilled in the art will realize that the exemplary configuration depicted in FIG. 7 is similar to the configuration depicted in FIG. 3, where the backlight control logic 302 of FIG. 3 can be likened to block 735 of FIG. 7, the modulator control logic 308 of FIG. 3 can be likened to block 702 of FIG. 7, and the light field simulation logic 306 of FIG. 3 can be likened to block 705 of FIG. 7, and therefore description of such blocks of FIG. 3 provided above can generally be used for the description of the corresponding blocks of FIG. 7.

As can be seen in the configuration 700 depicted in FIG. 7, an input video, such as an input RGB video, is fed to the modulator control logic 702 and to the LED drive determination control logic 735, where block 735 computes drive values, LED drive, for each LED of the backlight based on the input video signal, and block 702 computes drive values, LCD Drive, for each of the R, G, and B subpixels of the LCD panel.

The computed LED drive values are further provided to the light field simulation logic 705 which comprises a 9-LFS computation control logic, 750, a 9-LFS up-sampling control logic, 725, and a color matrix 3x3 control logic, 730. The 9-LFS computation control logic 750 computes the 9-channel LFS by performing convolution of the LED drive generated by the LED drive determination control logic 735 and the PSF on an LFS grid (later described). As described above, for each LED, 9 convolutions are performed, each using a different PSF of the 9-channel PSF module. The result of the convolution, the nine LFS channels, is then fed to the 9-LFS up-sampling control logic 725 which performs up-sampling of the LFS data to an LCD grid, as the LCD grid (which contains the image rendering pixels) typically has a higher resolution that the LFS grid. In turn, the up-sampled LFS data are fed to the color matrix 3x3 control logic 730 which groups the nine LFS values into a 3x3 (color) matrix for each pixel on the LCD grid. The 3x3 color matrix is then fed to the modulator control logic (702) for compensation of the LCD drive data.

With further reference to the exemplary embodiment according to the present disclosure depicted in FIG. 7, the modulator control logic block 702 comprises an inverse gamma control logic, 710, an LCD solver control logic, 715, and an LCD matching control logic, 720. The inverse gamma control logic 710 converts the input video into a linear representation which can allow manipulation of the associated data samples. The output of the inverse gamma control logic 710 is fed to the LCD solver control logic, 715, which computes target R, G, and B subpixel drive values by resolving a matrix equation in order to perform compensation of a drive signal to the LCD panel based on the backlight LFS computed by the light field simulation control logic 705 described above. More information on such matrix resolving can be found, for example, in the International Publication No. WO 2013/056117 A1, entitled "Methods and Apparatus for Backlighting Dual Modulation Display Devices", the disclosure of which is incorporated herein by reference in its entirety. Finally, the compensated LCD drive data computed by the LCD solver control logic 715 is fed to the LCD matching control logic 720 which performs a non-linear encoding of the data to compute the LCD drive signal. The non-linear encoding performed by the LCD matching control logic can be an inverse operation (e.g. via an inverse LUT) performed by the inverse gamma control logic 710.

With further reference to the 9-LFS computation control logic 750, according to an embodiment of the present disclosure such control logic computes a 9-LFS channel using a 9-PSF channel model, where each of the nine 2D PSF channels are modeled as two separable 1D function, each 1D function being approximated by a sum of limited number of terms, as represented by the expression (9).

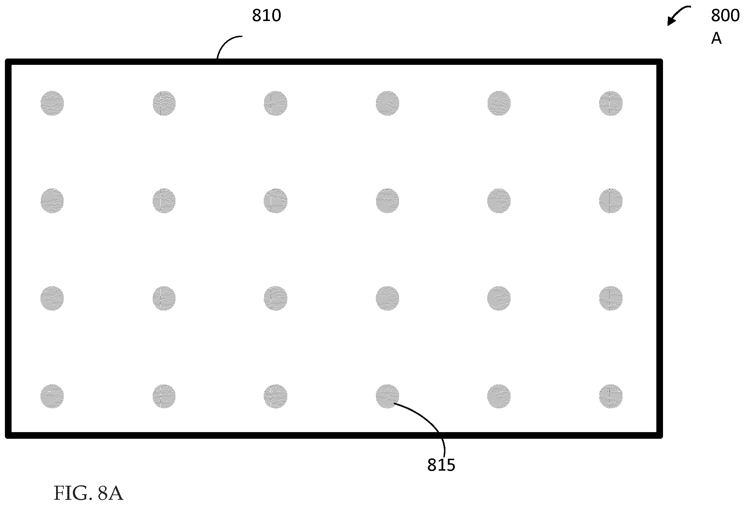

According to an exemplary embodiment of the present disclosure, the LEDs used as the primary light source can have a square pattern layout as depicted in FIG. 8A, where LEDs, 815, arranged in a square pattern are shown within the rectangular LCD panel 810. By denoting the number of rows of LEDs by *LEDV,* and the number of columns of LEDs by *LEDH,* the total number of LEDs in the exemplary configuration depicted in FIG. 8A is *LEDH * LEDV.* It should be noted that in the exemplary embodiment depicted in FIG. 8A, the resolution of the image rendering pixels (e.g. RGB) is assumed higher (in each of the columns and the rows) than the resolution of the LEDs 815 as laid out within the LCD panel 810. The person skilled in the art will know how to use the teachings according to the present disclosure to cases where the resolution of the LEDs is equal to or higher than the resolution of the LCD panel pixels.

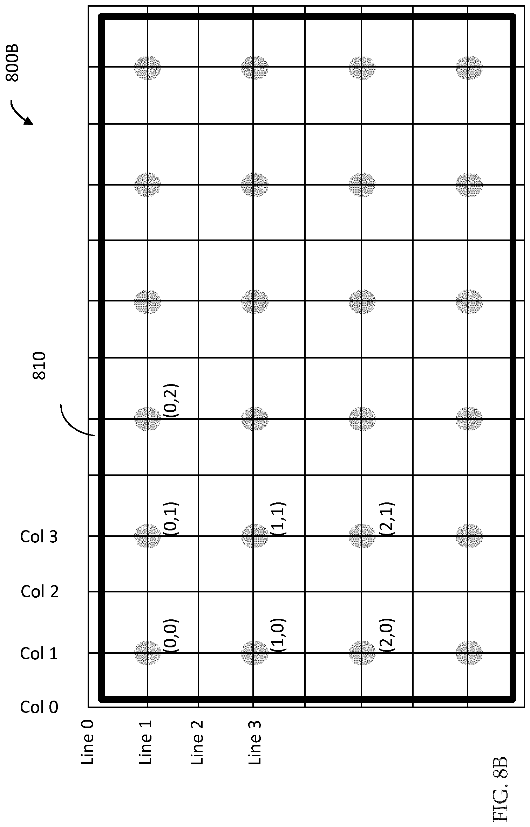

According to an embodiment of the present disclosure, the LED drive value determined by the LED drive determination control logic 735, and the light field points computed by the 9-LFS computation control logic 750 can be based on a 2x LED grid which has a width of (2**LEDH*-1) and a height of (2**LEDV*-1). Furthermore, as depicted in FIG. 8B, an LFS grid can be defined, which follows the 2x LED grid, but is extended to just cover the entire LCD panel 810. Because the offset between the LCD and the LED array is less than half one LED interval in both the horizontal and the vertical direction, the LFS grid just adds one row and one column at each edge of the 2x LED grid. Therefore, the LFS grid depicted in FIG. 8B has a width of LFSH = 1+(2**LEDH*-1)+1, and a height of LFSV = 1+(2**LEDV*-1)+1.

Let's denote the number of terms of each 1D function of the two 1D functions used in the modeling of each of the 2D PSF functions as *PSFTERMS,* and the number of light field channels as *NLF* (e.g. 9 or different), then the total number of sets of PSF data used in the computation of the light field at each position of the LFS grid is *NLF*2*PSFTERMS.*

According to a further embodiment of the present disclosure, in order to provide a uniform luminance by the LEDs when all LEDs are driven by a same drive value, a scalar may be used to scale each LED drive value. An array representing such scalar values for each of the LEDs is represented by *ledmod.*

Based on the above notations, an exemplary algorithm according to the present invention for computing a LFS is now presented. Such exemplary algorithm can represent a logic implemented in the 9-LFS computation control logic 750 of the configuration 700 depicted in FIG. 7. At each of the LFS grid positions (e.g. FIG. 8B), an LFS value is computed by adding all LED contributions at that location. Each LFS value is obtained by convolving the PSF with the modified LED drives (via *ledmod*).

With separable PSF, the 2D convolution is performed by two 1D convolutions. First a row is selected and vertical convolution is performed to all points on the row. Then, horizontal convolution is performed to all points on the processed row. This can be expresses as follows, taking into account expression (9):

$$l(ch, x, y) = \sum_r \sum_c psf(ch, x - x_c, y - y_r) \alpha_{r,c} \qquad (10a)$$

$$= \sum_r \sum_c \sum_k u_k(ch, x - x_c) v_k(ch, y - y_r) \alpha_{r,c}$$

$$= \sum_k \sum_c u_k(ch, x - x_c) \sum_r v_k(ch, y - y_r) \alpha_{r,c}$$

$$= \sum_k \sum_c u_k(ch, x - x_c) \beta_{c,k}(ch, y) \qquad (10b)$$

where *l(ch, x, y)* is the ch-channel LFS value at position (column = *x,* row = *y)* in the LFS grid, $\alpha_{r,c}$ is the LED drive value at position (row = *r, column* = c) in the LFS grid, $\beta_{c,k}$*(ch, y)* is the vertically filtered intermediate value for the ch-channel *k*-th term at row = *y* and column = c, and k is the number of PSF terms in the 1D decomposition.

According to an embodiment of the present disclosure an intermediate buffer can be used to store the first filtering results (e.g. $\beta_{c,k}$*(ch, y)*).

An exemplary source code for performing the exemplary algorithm for computing the LFS based on the expressions (9, 10a and 10b) is provided in source code 1A and 1B below. The exemplary source code 1A uses a single channel buffer, whereas the exemplary source code 1B uses multiple channel buffers. Such source codes according to the present invention can be executed in a hardware portion of the 9-LFS computation control logic 750 of FIG. 7, which can also include storage and lookup tables required for performing the algorithm.

```
/*Software-code*/
loop each lfsrow {
  loop each channel {
    /* 1st 1D convolution */
    loop each ledcol {
      loop each psfterm {
        acc = 0
        loop each ledrow {
          ledrow_in_lfs = ledrow*rowstride+ledrow_offset
          vindex = abs(lfsrow-ledrow_in_lfs)
          acc += leds(ledcol,ledrow)*PSFv(vindex,psfterm,channel)
        }
        /* Results from 1st 1D convolution: buffer samples */
        vbuf(ledcol,psfterm) = acc
      }
    }
    /* 2nd 1D convolution */
    loop each lfscol {
      acc = 0
      loop each psfterm {
        loop each ledcol {
          ledcol_in_lfs = ledcol*colstride+ledcol_offset
          hindex = abs(lfscol-ledcol_in_lfs)
          acc += vbuf(ledcol,psfterm)*PSFh(hindex,psfterm,channel)
        }
      }
      /* Results from 2nd 1D convolution: output LFS samples */
      lfs(channel,lfscol,lfsrow) = acc
    }
    /* Done generating one line of LFS samples for one channel */
  }
  /* Done generating one line of LFS samples for all channels */
}
```

Source code 1A

```
/*Software-code*/
loop each lfsrow {
  /* 1st 1D convolution */
  loop each channel {
    loop each ledcol {
      loop each psfterm {
        acc = 0
        loop each ledrow {
          ledrow_in_lfs = ledrow*rowstride+ledrow_offset
          vindex = abs(lfsrow-ledrow_in_lfs)
          acc += leds(ledcol,ledrow)*PSFv(vindex,psfterm,channel)
        }
        /* Results from 1st 1D convolution: buffer samples */
        vbuf(ledcol,psfterm,channel) = acc
      }
    }
  }
  /* 2nd 1D convolution */
  loop each lfscol {
    loop each channel {
      acc = 0
      loop each psfterm {
        loop each ledcol {
          ledcol_in_lfs = ledcol*colstride+ledcol_offset
          hindex = abs(lfscol-ledcol_in_lfs)
          acc += vbuf(ledcol,psfterm,channel)*PSFh(hindex,psfterm,channel)
        }
      }
      /* Results from 2nd 1D convolution: output LFS samples */
      lfs(channel,lfscol,lfsrow) = acc
    }
    /* Done generating one line of LFS samples for all channels */
  }
}
```

Source code 1B

A configuration of the 9-LFS computation control logic 750 with multiple channel buffer (e.g. source code 1B executed by hardware block 750) can provide a lower latency for starting the downstream up-sampling operation (per 9-LFS up-sampling block 725) as it can produce LFS output samples in a sequential order with all nine components available at each sample point before advancing to the next sample point. However, such configuration can require more intermediate storage for buffering multiple channels of first 1D convolution results.

In comparison, a configuration of the 9-LFS computation control logic 750 with single channel buffer (e.g. source code 1A executed by hardware block 750) can require less intermediate storage as it buffers the first 1D convolution results for one channel only but it produces one line of samples for a given channel before advancing to the next channel which may not be a preferred sequence of samples for the up-sampling operation. In order to sequentially access sample points having all nine components available, the line samples for the first eight channels need to be computed and stored. Then as the samples for the ninth channel on the same line are produced, the nine components at a sample point can be formed by retrieving eight samples stored from the precomputed line samples from the first eight channels at the given point along with the sample for the ninth channel as it is produced. Although the single channel buffer configuration can require less intermediate storage for the first 1D convolution results, it can require more output sample buffering before the downstream up-sampling operation can begin. Even if output sample buffering is acceptable, more computation has to be completed to fill the output sample buffer before the up-sampling operation can begin which can increase processing latency.

The total amount of arithmetic computation is the same and the output sample values are numerically identical for the two configurations. However the configuration with multiple channel buffers may be desired due to lower processing latency and lower total storage cost. Alternative configurations can be considered for different tradeoffs and are within the reach of the person skilled in the art in view of the present teachings.

The following Table 1 contains definitions for labels used in the exemplary source codes 1A and 1B

TABLE 1

| LFSH, LFSV: | horizontal and vertical size of the output LFS data |
|---|---|
| LEDH, LEDV: | horizontal and vertical size of the LED input data for LFS |
| PSFTERMS: | number of separable PSF terms |
| NLF: | number of LFS channels = 9 |
| lfscol: | horizontal index of output LFS samples from 0 to LFSH-1 |
| lfsrow: | vertical index of output LFS samples from 0 to LFSV-1 |
| ledcol: | horizontal index of LED input for LFS from 0 to LEDH-1 |
| ledrow: | vertical index of LED input for LFS from 0 to LEDV-1 |
| psfterm: | separable PSF term index from 0 to PSFTERMS-1 |
| channel: | LFS channel index from 0 to NLF-1 |
| ledcol_offset: | horizontal index offset in the LFS grid to the left-most LED position = 1 |
| ledrow_offset: | vertical index offset in the LFS grid to the top-most LED position = 1 |
| colstride: | horizontal index stride between LED columns in the LFS grid = 2 |
| rowstride: | vertical index stride between LED rows in the LFS grid = 2 |
| ledcol_in_lfs: | horizontal index of a LED input sample in the LFS grid |
| ledrow_in_lfs: | vertical index of a LED input sample in the LFS grid |
| hindex: | horizontal index for PSF data lookup |
| vindex: | vertical index for PSF data lookup |
| PSFh: 1D | horizontal PSF component for each separable PSF term and LFS channel |
| PSFv: | 1D vertical PSF component for each separable PSF term and LFS channel |
| vbuf: | buffer to store 1st 1D convolution results as input to 2nd 1D convolution |
| leds: | LED input data |
| lfs: | output LFS samples |
| acc: | accumulator |
| abs( ): | absolute value for indexing PSF data with symmetry for reduced PSF data |

The person skilled in the art will realize that the exemplary source codes 1A and 1B represent two of many possible software implementations for performing the LFS computation represented by the expressions (9, 10a and 10b) above. Such source codes can be dependent on a target hardware and available memory and can therefore be modified accordingly. Target hardware (e.g. module 750 of FIG. 7) can include any of the embodiments discussed above in the section entitled "implementation mechanisms - hardware overview".

EQUIVALENTS, EXTENSIONS, ALTERNATIVES AND MISCELLANEOUS

In the foregoing specification, possible embodiments of the invention have been described with reference to numerous specific details that may vary from implementation to implementation. Thus, the sole and exclusive indicator of what is the invention, and is intended by the applicants to be the invention, is the set of claims that issue from this application, in the specific form in which such claims issue, including any subsequent correction. Numerous modifications and variations of the invention are possible in light of the above teachings.

**Claims**

1.   An apparatus comprising:

a first logic arrangement (302; 735) configured to control one or more illumination sources (104; 210; 815) of a backlight (304) adapted to emit first light onto one or
more light conversion layers (102; 212), the one or more light conversion layers configured to be stimulated by the first light and to convert at least a portion of the first light into second light, the first light including at least one of UV spectral components or blue light spectral components;
a second logic arrangement (308; 702) configured to control one or more light modulators (112; 310), the one or more light modulators adapted to modulate the second light transmitting through individual elements;
a third logic arrangement (306; 610; 705) configured to perform at least one light field simulation of the second light based on a multi-channel point spread function (PSF) represented by a plurality of two-dimensional (2D) point spread functions, and
a fourth logic arrangement (308) configured to determine intermediate drive values for the one or more light modulators based on the at least one light field simulation,
**characterized in that**:
each of the plurality of two-dimensional point spread functions is modeled as an arithmetic sum of a limited number of one-dimensional functions.

2.   The apparatus of claim 1, wherein the first logic arrangement comprises logic for scaling a drive signal to each of the one or more illumination sources so as to provide a uniform light field when the one or more illumination sources are driven by a same drive signal value.

3.   The apparatus of any one of claims 1-2, wherein the third logic arrangement comprises logic to perform a one-dimensional convolution between the multi-channel point spread function and a scaled drive signal.

4.   The apparatus of claim 3, wherein the logic to perform the one-dimensional convolution performs operations on a LFS grid based on a layout of the one or more illumination sources.

5.   The apparatus of claim 4, wherein the operations on the LFS grid are provided by the following expressions:

$$l(ch, x, y) = \sum_r \sum_c psf(ch, x - x_c, y - y_r) a_{r,c}$$

$$= \sum_r \sum_c \sum_k u_k(ch, x - x_c) v_k(ch, y - y_r) a_{r,c}$$

$$= \sum_k \sum_c u_k(ch, x - x_c) \sum_r v_k(ch, y - y_r) a_{r,c}$$

$$= \sum_k \sum_c u_k(ch, x - x_c) \beta_{c,k}(ch, y),$$

where $l(ch, x, y)$ is the $ch$-channel LFS value at position column = $x$, row = $y$ in the LFS grid, $\alpha_{r,c}$ is a drive value at position row = $r$, column = c in the LFS grid, $\beta_{c,k}(ch, y)$ is a vertically filtered intermediate value for the ch-channel *k*-th term at row = *y* and column = c, and k is a number of PSF terms in the 1D decomposition .

6. The apparatus of any one of claims 1-5, wherein the one or more light conversion layers comprise a quantum dot layer, optionally wherein the second light comprises of a combination of frequencies in red, blue and green portions of a visible spectrum.

7. A method for driving a local-dimming display comprising:

emitting (404) first light by one or more individually controllable illumination sources onto a quantum dot layer, the first light including at least one of UV spectral components or blue light spectral components;
converting (406) the first light into second light by the quantum dot layer;
computing (410) one or more light field simulations of the second light based on a plurality of separable two-dimensional point spread functions (PSFs; and
based on the computing, determining (412) intermediate liquid crystal display modulation drive signals by the one or more light field simulations,
**characterized in that**:
each of the plurality of separable point spread functions being modeled as an arithmetic sum of a limited number of one-dimensional functions.

8. The method of claim 7, wherein a number of the one or more light field simulations is based on three values from CIE XYZ tristimulus values to represent color information and a number of color channels of the one or more light modulators.

9. The method of claim 8, wherein the number of the one or more light field simulations is nine, and the number of color channels is three.

10. The method of any one of claims 7-9, wherein the plurality of two-dimensional point spread functions is nine.

11. The method of any one of claims 7-10, wherein the limited number of one-dimensional terms is one of: a) three, b) four, c) five, d) six, e) seven, and f) a number larger than seven.

12. The method of any one of claims 7-11, wherein the step of emitting the first light comprises a step of scaling a drive signal to each of the one or more individually controllable illumination sources so as to provide a uniform light field when the one or more individually controllable illumination sources are driven by a same drive signal value.

13. The method of any one of the claims 7-12, wherein the step of computing the one or more light field simulations comprises a step of performing a one-dimensional convolution between the plurality of separable two-dimensional point spread functions and a scaled drive signal.

14. The method of claim 13, wherein the step of performing the one-dimensional convolution performs operations on a LFS grid based on a layout of the one or more individually controllable illumination sources.

**Patentansprüche**

1. Einrichtung, umfassend:

eine erste Logikanordnung (302; 735), die konfiguriert ist, eine oder mehrere Beleuchtungsquellen (104; 210; 815) einer Hintergrundbeleuchtung (304) zu steuern, die angepasst ist, erstes Licht auf eine oder mehrere Lichtumwandlungsschichten (102; 212) zu emittieren, wobei die eine oder mehreren Lichtumwandlungsschichten konfiguriert sind, von dem ersten Licht stimuliert zu werden und mindestens einen Bereich des ersten Lichts in zweites Licht umzuwandeln, wobei das erste Licht mindestens eines von UV-Spektralkomponenten oder Blaulicht-Spektralkomponenten beinhaltet;
eine zweite Logikanordnung (308; 702), die konfiguriert ist, einen oder mehrere Lichtmodulatoren (112; 310) zu steuern, wobei der eine oder die mehreren Lichtmodulatoren angepasst sind, das zweite Licht zu modulieren, das durch individuelle Elemente durchgeht;
eine dritte Logikanordnung (306; 610; 705), die konfiguriert ist, mindestens eine Lichtfeldsimulation des zweiten Lichts basierend auf einer Mehrkanalpunktverteilungsfunktion (PSF) durchzuführen, die von einer Vielzahl von zweidimensionalen (2D) Punktverteilungsfunktionen dargestellt wird, und

eine vierte Logikanordnung (308), die konfiguriert ist, Zwischenaussteuerungswerte für den einen oder die mehreren Lichtmodulatoren basierend auf der mindestens einen Lichtfeldsimulation zu bestimmen,

**dadurch gekennzeichnet, dass**

jede der Vielzahl von zweidimensionalen Punktverteilungsfunktionen als eine arithmetische Summe einer begrenzten Zahl eindimensionaler Funktionen modelliert ist.

2. Einrichtung nach Anspruch 1, wobei die erste Logikanordnung Logik zum Skalieren eines Aussteuerungssignals zu jeder der einen oder mehreren Beleuchtungsquellen umfasst, um ein einheitliches Lichtfeld bereitzustellen, wenn die eine oder mehreren Beleuchtungsquellen von einem selben Aussteuerungssignalwert ausgesteuert werden.

3. Einrichtung nach einem der Ansprüche 1-2, wobei die dritte Logikanordnung Logik umfasst, um eine eindimensionale Entfaltung zwischen der Mehrkanalpunktverteilungsfunktion und einem skalierten Aussteuerungssignal durchzuführen.

4. Einrichtung nach Anspruch 3, wobei die Logik, um die eindimensionale Entfaltung durchzuführen, Operationen an einem LFS-Gitter basierend auf einem Layout der einen oder mehreren Beleuchtungsquellen durchführt.

5. Einrichtung nach Anspruch 4, wobei die Operationen an dem LFS-Gitter von den folgenden Ausdrücken bereitgestellt werden:

$$
\begin{aligned}
l(ch, x, y) &= \sum_r \sum_c psf(ch, x - x_c, y - y_r)\alpha_{r,c} \\
&= \sum_r \sum_c \sum_k u_k(ch, x - x_c)v_k(ch, y - y_r)\alpha_{r,c} \\
&= \sum_k \sum_c u_k(ch, x - x_c) \sum_r v_k(ch, y - y_r)\alpha_{r,c} \\
&= \sum_k \sum_c u_k(ch, x - x_c)\beta_{c,k}(ch, y)
\end{aligned}
$$

wobei *l(ch, x, y)* der ch-Kanal LFS-Wert bei Position Spalte = *x, Reihe = y* in dem LFS-Gitter ist, $\alpha_{r,c}$ ein Aussteuerungswert bei Position Reihe = *r, Spalte* = c in dem LFS-Gitter ist, $\beta_{c,k}$*(ch, y)* ein vertikal gefilterter Zwischenwert für den ch-Kanal *k*-ten Ausdruck bei Reihe = y und Spalte = c ist und k eine Zahl von PSF-Ausdrücken in der 1D-Zerlegung ist.

6. Einrichtung nach einem der Ansprüche 1-5, wobei die eine oder mehreren Lichtumwandlungsschichten eine Quantenpunktschicht umfassen, optional wobei das zweite Licht eine Kombination von Frequenzen in roten, blauen und grünen Bereichen eines sichtbaren Spektrums umfasst.

7. Verfahren zum Aussteuern einer Anzeige mit lokalem Dimming, umfassend:

Emittieren (404) ersten Lichts durch eine oder mehrere individuell steuerbare Beleuchtungsquellen auf eine Quantenpunktschicht, wobei das erste Licht mindestens eine von UV-Spektralkomponenten oder Blaulicht-Spektralkomponenten beinhaltet;
Umwandeln (406) des ersten Lichts in zweites Licht durch die Quantenpunktschicht;
Berechnen (410) einer oder mehrerer Lichtfeldsimulationen des zweiten Lichts, basierend auf einer Vielzahl von trennbaren zweidimensionalen Punktverteilungsfunktionen (PSFs); und
basierend auf dem Berechnen, Bestimmen (412) von Zwischenflüssigkristallanzeigemodulationsaussteuerungssignalen durch die eine oder mehreren Lichtfeldsimulationen,
**dadurch gekennzeichnet, dass**
jede der Vielzahl von trennbaren Punktverteilungsfunktionen als eine arithmetische Summe einer begrenzten Zahl eindimensionaler Funktionen modelliert wird.

8. Verfahren nach Anspruch 7, wobei eine Zahl der einen oder mehreren Lichtfeldsimulationen auf drei Werten von CIE XYZ Tristimulus-Werten basiert, um Farbinformationen und eine Zahl von Farbkanälen des einen oder der mehreren Lichtmodulatoren darzustellen.

9. Verfahren nach Anspruch 8, wobei die Zahl der einen oder mehreren Lichtfeldsimulationen neun ist und die Zahl von Farbkanälen drei ist.

10. Verfahren nach einem der Ansprüche 7-9, wobei die Vielzahl von zweidimensionalen Punktverteilungsfunktionen neun ist.

11. Verfahren nach einem der Ansprüche 7-10, wobei die begrenzte Zahl von eindimensionalen Ausdrücken eine ist von: a) drei, b) vier, c) fünf, d) sechs, e) sieben und f) einer größeren Zahl als sieben.

12. Verfahren nach einem der Ansprüche 7-11, wobei der Schritt zum Emittieren des ersten Lichts einen Schritt zum Skalieren eines Aussteuerungssignals zu jeder der einen oder mehreren individuell steuerbaren Beleuchtungsquellen umfasst, um ein einheitliches Lichtfeld bereitzustellen, wenn die eine oder mehreren individuell steuerbaren Beleuchtungsquellen von einem selben Aussteuerungssignalwert ausgesteuert werden.

13. Verfahren nach einem der Ansprüche 7-12, wobei der Schritt zum Berechnen der einen oder mehreren Lichtfeldsimulationen einen Schritt zum Durchführen einer eindimensionalen Entfaltung zwischen der Vielzahl von trennbaren zweidimensionalen Punktverteilungsfunktionen und einem skalierten Aussteuerungssignal umfasst.

14. Verfahren nach Anspruch 13, wobei der Schritt zum Durchführen der eindimensionalen Entfaltung Operationen auf einem LFS-Gitter basierend auf einem Layout der einen oder mehreren individuell steuerbaren Beleuchtungsquellen durchführt.

**Revendications**

1. Appareil comprenant :

un premier agencement logique (302 ; 735) configuré pour commander une ou plusieurs sources d'éclairage (104; 210; 815) d'un rétroéclairage (304) adaptées pour émettre une première lumière sur une ou plusieurs couches de conversion de lumière (102 ; 212), l'une ou plusieurs couches de conversion de lumière configurées pour être stimulées par la première lumière et pour convertir au moins une partie de la première lumière en seconde lumière, la première lumière incluant au moins l'une de composantes spectrales UV ou de composantes spectrales de lumière bleue ;
un deuxième agencement logique (308; 702) configuré pour commander un ou plusieurs modulateurs de lumière (112 ; 310), l'un ou plusieurs modulateurs de lumière adaptés pour moduler la seconde lumière se transmettant à travers des éléments individuels ;
un troisième agencement logique (306; 610; 705) configuré pour effectuer au moins une simulation de champ lumineux de la seconde lumière sur la base d'une fonction d'étalement du point (PSF) multicanal représentée par une pluralité de fonctions d'étalement du point bidimensionnelles (2D), et un quatrième agencement logique (308) configuré pour déterminer des valeurs de pilotage intermédiaires pour l'un ou plusieurs modulateurs de lumière sur la base de l'au moins une simulation de champ lumineux,
**caractérisé en ce que** :
chacune de la pluralité de fonctions d'étalement du point bidimensionnelles est modélisée comme une somme arithmétique d'un nombre limité de fonctions monodimensionnelles.

2. Appareil selon la revendication 1, dans lequel le premier agencement logique comprend une logique pour mettre un signal de pilotage à l'échelle de chacune de l'une ou plusieurs sources d'éclairage de manière à fournir un champ lumineux uniforme lorsque l'une ou plusieurs sources d'éclairage sont pilotées par une même valeur de signal de pilotage.

3. Appareil selon l'une quelconque des revendications 1-2, dans lequel le troisième agencement logique comprend une logique pour effectuer une convolution monodimensionnelle entre la fonction d'étalement du point multicanal et un signal de pilotage mis à l'échelle.

4. Appareil selon la revendication 3, dans lequel la logique pour effectuer la convolution monodimensionnelle effectue des opérations sur une grille LFS sur la base d'une disposition de l'une ou plusieurs sources d'éclairage.

**5.** Appareil selon la revendication 4, dans lequel les opérations sur la grille LFS sont fournies par les expressions suivantes :

$$l(ch, x, y) = \sum_r \sum_c psf(ch, x - x_c, y - y_r)\alpha_{r,c}$$

$$= \sum_r \sum_c \sum_k u_k(ch, x - x_c)v_k(ch, y - y_r)\alpha_{r,c}$$

$$= \sum_k \sum_c u_k(ch, x - x_c) \sum_r v_k(ch, y - y_r)\alpha_{r,c}$$

$$= \sum_k \sum_c u_k(ch, x - x_c)\beta_{c,k}(ch, y),$$

où $l(ch, x, y)$ est la valeur LFS du canal $ch$ à la position colonne = $x$, $ligne = y$ dans la grille LFS, $\alpha_{r,c}$ est une valeur de pilotage à la position ligne = $r$, $colonne = c$ dans la grille LFS, $\beta_{c,k}(ch, y)$ est une valeur intermédiaire filtrée verticalement pour le k-ième terme du canal $ch$ à la ligne = y et colonne = c, et k est un nombre de termes PSF dans la décomposition 1D.

**6.** Appareil selon l'une quelconque des revendications 1-5, dans lequel l'une ou plusieurs couches de conversion de lumière comprennent une couche de points quantiques, optionnellement dans lequel la seconde lumière comprend une combinaison de fréquences dans des parties rouge, bleue et verte d'un spectre visible.

**7.** Procédé de pilotage d'un écran à gradation locale comprenant :

une émission (404) d'une première lumière par une ou plusieurs sources d'éclairage commandables individuellement sur une couche de points quantiques, la première lumière incluant au moins l'une de composantes spectrales UV ou de composantes spectrales de lumière bleue ;
une conversion (406) de la première lumière en seconde lumière par la couche de points quantiques ;
un calcul (410) d'une ou plusieurs simulations de champ lumineux de la seconde lumière sur la base d'une pluralité de fonctions d'étalement du point bidimensionnelles séparables (PSFs ; et
sur la base du calcul, une détermination (412) de signaux de pilotage de modulation d'écran à cristaux liquides intermédiaires par l'une ou plusieurs simulations de champ lumineux,
**caractérisé en ce que** :
chacune de la pluralité de fonctions d'étalement du point séparables étant modélisée comme une somme arithmétique d'un nombre limité de fonctions monodimensionnelles.

**8.** Procédé selon la revendication 7, dans lequel un certain nombre de l'une ou plusieurs simulations de champ lumineux est basé sur trois valeurs issues de valeurs trichromatiques CIE XYZ pour représenter des informations de couleurs et un certain nombre de canaux de couleur de l'un ou plusieurs modulateurs de lumière.

**9.** Procédé selon la revendication 8, dans lequel le nombre de l'une ou plusieurs simulations de champ lumineux est de neuf, et le nombre de canaux de couleur est de trois.

**10.** Procédé selon l'une quelconque des revendications 7-9, dans lequel la pluralité de fonctions d'étalement du point bidimensionnelles est de neuf.

**11.** Procédé selon l'une quelconque des revendications 7-10, dans lequel le nombre limité de termes monodimensionnels est l'un parmi : a) trois, b) quatre, c) cinq, d) six, e) sept, et f) un nombre supérieur à sept.

**12.** Procédé selon l'une quelconque des revendications 7-11, dans lequel l'étape d'émission de la première lumière comprend une étape consistant à mettre un signal de pilotage à l'échelle de chacune de l'une ou plusieurs sources d'éclairage commandables individuellement de manière à fournir un champ lumineux uniforme lorsque l'une ou plusieurs sources d'éclairage commandables individuellement sont pilotées par une même valeur de signal de pilotage.

**13.** Procédé selon l'une quelconque des revendications 7-12, dans lequel l'étape de calcul de l'une ou plusieurs simulations de champ lumineux comprend une étape consistant à effectuer une convolution monodimensionnelle entre la pluralité de fonctions d'étalement du point bidimensionnelles séparables et un signal de pilotage mis à l'échelle.

14. Procédé selon la revendication 13, dans lequel l'étape consistant à effectuer la convolution monodimensionnelle effectue des opérations sur une grille LFS sur la base d'une disposition de l'une ou plusieurs sources d'éclairage commandables individuellement.

FIG. 1

PSF luminance

FIG.
2A

Color ratios of PSFs
CIE XYZ

FIG.
2B

FIG.
2C

Color shift spatially
In the Light field

Non uniform
Light Field

210

212

BLUE LEDs

QD Sheet

FIG.
2D

FIG. 3

400

```
┌─────────────────────┐
│ generate drive      │
│ signals for backlight│──── 402
│ sources             │
└─────────────────────┘
          │
          ▼
┌─────────────────────┐
│ emit first light from│
│ backlight sources   │──── 404
└─────────────────────┘
          │
          ▼
┌─────────────────────┐
│ convert first light to│
│ second light        │──── 406
└─────────────────────┘
          │
          ▼
┌─────────────────────┐
│ (optional) generate │
│ drive values for    │──── 408
│ modulator           │
└─────────────────────┘
          │
          ▼
┌─────────────────────┐
│ perform light field │
│ simulation(s)       │──── 410
└─────────────────────┘
          │
          ▼
┌─────────────────────┐
│ provide             │
│ compensated drive   │──── 412
│ values for          │
│ modulator           │
└─────────────────────┘
```

FIG. 4

FIG. 5

DISPLAY
512

INPUT DEVICE
514

CURSOR
CONTROL
516

MAIN
MEMORY
506

ROM
508

STORAGE
DEVICE
510

BUS
502

PROCESSOR
504

COMMUNICATION
INTERFACE
518

500

SERVER
530

INTERNET
528

ISP
526

NETWORK
LINK
520

LOCAL
NETWORK
522

HOST
524

EP 3 147 893 B1

30

FIG. 6A

FIG. 6B

FIG. 7

FIG. 8A

FIG. 8B

**EP 3 147 893 B1**

## REFERENCES CITED IN THE DESCRIPTION

**Patent documents cited in the description**

- WO 2014137565 A1
- US 370115
- US 8277056 B
- US 8172401 B
- US 030896
- WO 2013056117 A1